(19) Europäisches Patentamt
European Patent Office
Office européen des brevets

(11) **EP 3 961 561 A1**

(12) **EUROPEAN PATENT APPLICATION**

(43) Date of publication:
**02.03.2022 Bulletin 2022/09**

(21) Application number: **20192913.0**

(22) Date of filing: **26.08.2020**

(51) International Patent Classification (IPC):
**G06T 7/11** (2017.01)     **G06T 7/149** (2017.01)
**G06N 3/04** (2006.01)     **G06N 3/08** (2006.01)

(52) Cooperative Patent Classification (CPC):
**G06N 3/084; G06N 3/0454; G06T 7/11;**
**G06T 7/149;** G06N 3/0445; G06N 3/0472;
G06T 2207/20084

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens Healthcare GmbH**
**91052 Erlangen (DE)**

(72) Inventors:
• **Amer, Karim**
**11614 Cairo (EG)**
• **El-Zehiry, Noha**
**Plainsboro, NJ 08536 (US)**

(54) **METHOD FOR DESIGNING A MODULE FOR IMAGE SEGMENTATION**

(57)     The invention describes a method for designing a module for image segmentation, comprising the steps:
- providing a module comprising a neural network,
- providing a computing unit designed for training the neural network of the module,
- providing a plurality of training images,
- training of the neural network with the training images by using a Mumford-Shah Energy Function as loss function for training and/or by minimizing the Mumford-Shah Energy.

The invention further describes a module and a method for image segmentation and a respective imaging system.

## FIG 4

**Description**

The invention describes a method for designing a module for image segmentation and such module, especially for the segmentation of medical images. The invention further describes a method for image segmentation as well as an imaging system. The invention is based on neural networks, especially deep learning neural networks.

There is a big variety of methods used for image segmentation based on neural networks. All these methods have in common that the neural networks have to be trained. Typically, neural networks are trained using stochastic techniques, e.g. gradient descent optimization, wherein a loss function is chosen that is a measure for the internal learning process. Typically, the accuracy of the results of a neural network depends on this loss function.

For the training of neural networks an optimization process is used that requires said loss function to calculate the model error. Often, loss functions tare based on Maximum Likelihood, Cross-entropy and Mean Squared Error. Usually, the training of a neural network results in a modification of weights or other functions that represent the internal "connections" of the network. These weights or functions are modified using the backpropagation of error algorithm.

Shortly said, the training of neural networks is generally based on solving an optimization problem, that in turn is based on a loss function.

Concerning image segmentation, most of the known segmentation algorithms use binary cross entropy loss functions to train the models to generate masks that best segment the object of interest. The model (neural network) implicitly learns the shape of the desired object from the training example.

A common drawback of these methods is that sometimes a bias to the learned model is developed, particularly when the training data set is small. In that case, the training over-fits and the shape is memorized. Or if there is already a bias in the training set (e.g. objects are annotated too small or too large), the model learns this bias and it becomes very difficult to recover from it. When this happens, the segmentation results can deviate from the correct boundaries even if they are very clearly visible to the human eye. Concerning image segmentation, this bias can be designated as "shape-bias".

It is the object of the present invention to improve the known methods and devices to facilitate an improvement in image segmentation, especially concerning the segmentation of medical images.

This object is achieved by a method for designing a module for image segmentation according to claim 1, a module for image segmentation according to claim 11, a method for image segmentation according to claim 12 and a respective imaging system according to claim 13.

A method according to the invention for designing a module, i.e. a hardware-module or a software-module, for image segmentation, comprises the following steps:

- providing a module comprising a neural network,
- providing a computing unit designed for training the neural network of the module,
- providing a plurality of training images,
- training of the neural network with the training images by using a Mumford-Shah Energy Function as basis for a loss function for training and/or by minimizing the Mumford-Shah Energy (Function).

The first steps should only clarify that the correct components are used for the method. The module is the (untrained) module that should perform the segmentation later. To achieve that, it must be trained. i.e. its neural network, e.g. a deep neural network such as a convolutional network, has to be trained. The module itself can be the neural network, but it also can comprise other components as well, e.g. other networks for validate results or means for data communication.

The computing unit must be able to perform the training. It can be a special unit only used for training, however, it also can be a unit in an imaging system, e.g. a control unit, that is specially designed for also training the neural network of the module. The last feature has the advantage that the module can be further trained while being used.

The training images are necessary for training the module, i.e. training the neural network of the module. They should show the objects similar to object later examined, e.g. organs or body regions in medicine. However, the module can also be trained with images showing arbitrary objects (real and/or artificial) so that the module learns the basic principles of image segmentation.

Up to this point, all steps are well known in the art, especially in the technical field of image segmentation. The following step defines the special trained module with a specific training procedure.

The training of the neural network is achieved with the training images by using a Mumford-Shah Energy (Function) as basis for a loss function for training. This means that the loss function for training comprises at least the Mumford-Shah energy (or a suitable approximation), and preferably further components, e.g. binary cross entropy. Since the Mumford-Shah Energy is not easy to calculate, it is preferred to use certain approximations to approximate this energy, e.g. with a Chan-Vese approximation or a piecewise smooth approximation.

It is well known to use loss functions for training neural networks. However, in the field of image segmentation the inventors surprisingly found out that using the Mumford-Shah Energy as loss function in training (deep) neural networks, especially the Chan-Vese approximation or other suitable approximations, will achieve very good segmentation results in later applications. Especially, devising such loss function could correct any strong shape biases in traditional deep learning training methods and explicitly take into consideration data intensity distributions so the segmentation can always capture the correct boundary.

Alternatively or additionally, the Mumford-Shah Energy (Function) can be minimized in the course of training and the model can be specially trained to minimize the Mumford-Shah Energy Function (as loss function). Thus, there are the possibilities that the module is directly trained with this energy to process images or to mathematically minimize this energy (and probably not directly process images).

Thus, the trained module can be used to process images directly and/or to be used in conventional image segmentation processes instead of algorithms that are conventionally calculating the minimization of the Mumford-Shah Energy. Especially, the module is used as an alternative optimization method for the conventional minimization of the Chan-Vese energy function, that is usually performed using gradient descent solutions (in continuous setting with PDE representations) or max flow (in discrete setting when represented by on graphs).

It should be noted that the module can be trained with reconstructed images or with raw data of images. With the special training, especially deep learning models are encouraged to learn the intensity distribution of an image.

A module for image segmentation according to the invention is trained with a method according to the invention. The module preferably comprises a deep learning model/algorithm, especially a convolutional network, e.g. a U-Net architecture.

A method for image segmentation according to the invention comprises the following steps:

- Providing a module according to the invention.

- Inputting a number of images into the module. These images could be especially 2D images, 3D images or a stack of 2D images resulting in a sliced 3D image. To achieve best results, the images should be preferably similar to training images, what means that they do not have to be identical, but at least show a similar motive. Regarding e.g. medicine, when trained on training images of the heart, the images inputted should also show a heart.

- Generating an output with the module based on the number of images. Since the module is trained, it automatically generates results of inputted images. The output can be generated by processing the images directly or by minimizing the Mumford-Shah Energy (Function).

An imaging system (meaning a system for recording images and/or an image processing system) according to the invention is preferably a medical imaging system and comprises a module according to the invention or it is designed for performing a method according to the invention. since typically, an imaging system comprises a control device controlling this imaging system, it is preferred that the control device of the imaging system comprises a module according to the invention or it is designed for performing a method according to the invention.

Some units or modules of the module or a system for image segmentation can be completely or partially realized as software modules running on a processor of a module or system. A realization largely in the form of software modules can have the advantage that applications already installed on an existing system can be updated, with relatively little effort, to install and run these units of the present application. The object of the invention is also achieved by a computer program product with a computer program that is directly loadable into the memory of a computing device, and which comprises program units to perform the steps of the inventive method when the program is executed by the computing device. In addition to the computer program, such a computer program product can also comprise further parts such as documentation and/or additional components, also hardware components such as a hardware key (dongle etc.) to facilitate access to the software.

A computer readable medium such as a memory stick, a hard-disk or other transportable or permanently-installed carrier can serve to transport and/or to store the executable parts of the computer program product so that these can be read from a processor unit of a computing system. A processor unit can comprise one or more microprocessors or their equivalents.

Particularly advantageous embodiments and features of the invention are given by the dependent claims, as revealed in the following description. Features of different claim categories may be combined as appropriate to give further embodiments not described herein.

In the following, the basic principles and functions of the invention are described. Although the Mumford-Shah Energy (Function) is a mathematical function, its use for training results in a module with a very special inner structure. Basically, images are typically datasets of intensity information. Alternatively, they may comprise raw data, that is, however, also representing this intensity information. The aim of segmenting images is to determine intensity distribution information.

We start by reviewing one of the fundamental models in modeling objects of interests, the Chan-Vese segmentation model, which is a piecewise constant approximation of the well-known Mumford-Shah functional

$$E_{MS}(u,C) = \lambda \int_{\Omega} |I(x,y) - u(x,y)|^2 \, dxdy + \int_{\Omega/C} |\nabla u(x,y)|^2 \, dxdy + \mu L(C) \,. \qquad (1)$$

With the components:

C:  Curve
$\lambda$:  weight of difference term
$\mu$:  weight of contour length term
$\Omega$:  bounded open subset of the coordinate space
u:  solution image
L:  Length of the curve C

It should be noted that the coordinates (x, y) that refer to a 2D image could also represent a 3D image with (x, y, z). Thus, for a 3D case, (x, y) should be read as (x, y, z) and for a 4D case, (x, y) should be read as (x, y, z, t). This applies for all coordinates mentioned in this text.

According to a preferred method, image intensities to calculate the Mumford Shah Energy are approximated with the mean intensity inside an object of interest and the mean intensity outside the object of interest. It is preferred that the loss function comprises the minimization of the intensity deviations around the mean values inside and outside the object.

The piecewise constant Chan-Vese model aims at approximating the image intensities with two values, the mean intensity inside the object of interest and the mean intensity outside the object of interest. Theoretically it was proven that minimizing the intensity deviations around the mean values inside and outside the object would yield the correct delineation of the structure of interest. The Chan-Vese energy function can be represented as:

$$E_{CV} = \iint_{xy} F_{inside} H_{xy} \, dxdy + \iint_{xy} F_{outside} (1 - H_{xy}) \, dxdy + \mu L(H_{xy}) + \gamma A(H_{xy}) \qquad (2)$$

with

$$F_{inside}(x,y) = |I(x,y) - c_{inside}(x,y)|^2 \quad \text{and} \quad F_{outside}(x,y) = |I(x,y) - c_{outside}(x,y)|^2 \,, \qquad (3)$$

$$c_{inside} = \frac{\iint_{xy} I(x,y) H_{xy} \, dxdy}{\iint_{xy} H_{xy} \, dxdy} \quad \text{and} \quad c_{outside} = \frac{\iint_{xy} I(x,y)(1 - H_{xy}) \, dxdy}{\iint_{xy} (1 - H_{xy}) \, dxdy} \,, \qquad (4)$$

and with

I(x, y):  input image
$\varphi(x, y)$:  distance from the contour to pixel (x, y)
$H_{xy} = H(\varphi(x, y))$:  step function
$c_{inside}$, $c_{outside}$:  mean inside/outside the contour
$\mu$:  weight of contour length term
$\gamma$:  weight of contour area term
x, y:  represent a coordinate system.

Thus, according to a preferred method, the training images comprise a spatial intensity I(x, y) and the Mumford-Shah Energy is approximated with a distance $\varphi(x, y)$ from a contour to a pixel (x, y), a step function $H_{xy} = H(\varphi(x, y))$, a weight $\mu$ of a contour length term L, and a weight $\gamma$ of a contour area term A by the formulas (2), (3) and (4).

As said above, the coordinates (x, y) have to be read according to the dimension of the case. Thus, the above equations could also be read with a vector x comprising the coordinates of the respective coordinate system (e.g. (x, y), (x, y, z), (t, x, y, z) or any other abstract dimension, e.g. with higher dimensions where the problem turns into a data clustering problem with two segmented clusters based on a set of features). Thus, the equations could be read as:

$$E_{CV} = \int_{\vec{x}} F_{inside} H d\vec{x} + \int_{\vec{x}} F_{outside} (1-H) d\vec{x} + \mu L(H) + \gamma A(H)$$

with

$$F_{inside} = \left| I - c_{inside} \right|^2 \quad \text{and} \quad F_{outside} = \left| I - c_{outside} \right|^2 ,$$

and

$$c_{inside} = \frac{\int_{\vec{x}} IH d\vec{x}}{\int_{\vec{x}} H d\vec{x}} \quad \text{and} \quad c_{outside} = \frac{\int_{\vec{x}} I(1-H) d\vec{x}}{\int_{\vec{x}} (1-H) d\vec{x}} ,$$

with H being the respective step function $H = H(\varphi(\vec{x}))$. In any of the following formulas, (x, y) can be replaced by $\vec{x}$ and dxdy can be replaced by $d\vec{x}$.

Each term can be seen as a force either trying to expand or shrink the segmentation until reaching a point of balance between all these forces. The Chan-Vese model (or approximation) has several advantages. It has a simple formulation which only depends on brightness without using image gradients. Moreover, it is differentiable and can be optimized using gradient-based methods. However, a minor drawback of this approach is that it doesn't transform the acquired knowledge between images.

The minimization of the energy function E (i.e. $E_{MS}$ or $E_{CV}$ or any other approximation) yields the object boundary. Classical segmentation methods have explored the minimization of E in different platforms. For example, Chan and Vese used a level set formulation to optimize the energy function in a continuous optimization setting. Alternatively, several classical segmentation models utilized the energy function E to obtain the boundary of the object. Again: the invention does not refer to the application and calculation of the Mumford Shah Energy or an approximation. The invention concerns the use of this Mumford Shah Energy for training a (deep) neural network. Thus, instead of using the well-known binary cross entropy segmentation loss of the state of the art, a Mumford Shah Energy, preferably the Chan-Vese energy function or another approximation is included in the loss function. It should be noted that the loss function may also comprise other terms additionally to the Mumford Shah Energy or a suitable approximation, e.g. the Chan-Vese energy.

Preferably, an approximation for the segmentation problem is formulated as follows: Given an Image I and a binary ground truth mask G. Image-to-Image network architecture can be used to compute a probability P that a pixel belongs to the object and a segmentation mask M is obtained by thresholding the probability map P at a predefined threshold T.

To define a loss function that takes into consideration the intensity distribution of the image, the Mumford Shah Energy Function is approximated to an Energy Function $E_{CV}$ (the index refers to Chan Vese).

Thus, according to a preferred method, the training images comprise a spatial intensity I(x, y), a and a binary ground truth mask G for the images is provided. Then, a probability map P (x, y) is calculated giving the probability that a pixel belongs to the object and a segmentation mask M is obtained by thresholding the probability map P at a predefined threshold T. The Mumford-Shah Energy is approximated with an energy function $E_{CV}$ by the formula:

$$E_{CV} = \iint_{xy} F_{inside}(x, y) P(x, y) dxdy + \iint_{xy} F_{outside}(x, y)(1 - P(x, y)) dxdy \qquad (5)$$

again with

$$F_{inside}(x, y) = \left| I(x, y) - c_{inside}(x, y) \right|^2 \quad \text{and} \quad F_{outside}(x, y) = \left| I(x, y) - c_{outside}(x, y) \right|^2 . \qquad (3)$$

The mean values $c_{inside}$, $c_{outside}$ inside and outside a contour are preferably:

$$c_{inside} = \frac{\iint_{xy} I(x,y)\overline{M}(x,y)dxdy}{\iint_{xy} M(x,y)dxdy} \quad \text{and} \quad c_{inside} = \frac{\iint_{xy} I(x,y)(1-M(x,y))dxdy}{\iint_{xy}(1-M(x,y))dxdy} . \quad (6)$$

However, a preferred alternative for the functions $c_{inside}$ and $c_{outside}$ is described in the following.

For numerical stability, the image I can be normalized relative to the mean and the standard deviation of the intensity distribution.

Preferably, the energy (function) can be computed only in a narrow band B around the boundary, modifying the energy to

$$E_{CV} = \iint_{xy} F_{inside}(x,y)P(x,y)B(x,y)dxdy + \iint_{xy} F_{outside}(x,y)(1-P(x,y))B(x,y)dxdy \quad (7)$$

again with

$$F_{inside}(x,y) = |I(x,y)-c_{inside}(x,y)|^2 \quad \text{and} \quad F_{outside}(x,y) = |I(x,y)-c_{outside}(x,y)|^2 . \quad (3)$$

Thus, according to a preferred method, the images I are normalized relative to the mean and the standard deviation of the intensity distribution and energy is computed only in a narrow band around a boundary B around an object of interest by the formulas (7) and (3).

The previous description assumes that the image is modeled using a piecewise constant intensity distribution which is not always very realistic in medical images. The model can be extended to relax this constraint and instead of having two global means to represent the mean intensity values inside and outside the object. We can compute a local mean in the vicinity of each pixel. This provides a more realistic modeling of the image intensity distribution and in practice provides advantageous results.

According to a preferred method, the mean values $c_{inside}$, $c_{out\text{-}side}$ inside and outside a contour are

$$c_{inside}(x,y) = \frac{\int_{i=-r2/2}^{r2/2}\int_{j=-r1/2}^{r1/2} I(x-i,y-j)H_{x-i,y-j}\,didj}{\int_{i=-r2/2}^{r2/2}\int_{j=-r1/2}^{r1/2} H_{x-i,y-j}\,didj}$$

and

$$c_{outside}(x,y) = \frac{\int_{i=-r2/2}^{r2/2}\int_{j=-r1/2}^{r1/2} I(x-i,y-j)(1-H_{x-i,y-j})\,didj}{\int_{i=-r2/2}^{r2/2}\int_{j=-r1/2}^{r1/2}(1-H_{x-i,y-j})\,didj}, \quad (8)$$

for the Mumford Shah Energy as shown in formula (1), or preferably for a term for the Chan Vese Approximation like shown in formulas (2) or (5):

$$c_{inside}(x, y) = \frac{\int\limits_{i=-r2/2}^{r2/2} \int\limits_{j=-r1/2}^{r1/2} I(x-i, y-j) M(x-i, y-j) didj}{\int\limits_{i=-r2/2}^{r2/2} \int\limits_{j=-r1/2}^{r1/2} M(x-i, y-j) didj}$$

and

$$c_{outside}(x, y) = \frac{\int\limits_{i=-r2/2}^{r2/2} \int\limits_{j=-r1/2}^{r1/2} I(x-i, y-j)(1 - M(x-i, y-j)) didj}{\int\limits_{i=-r2/2}^{r2/2} \int\limits_{j=-r1/2}^{r1/2} (1 - M(x-i, y-j)) didj}, \qquad (9)$$

where r1 and r2 are local radii around a pixel (x, y).

It should be noted that all equations should be read not only for the 2D case, but also for cases with higher dimensions, like:

$$c_{inside} = \frac{\int\limits_{\vec{i}=-\vec{r}/2}^{\vec{r}/2} I(\vec{x}-\vec{i}) M(\vec{x}-\vec{i}) d\vec{i}}{\int\limits_{\vec{i}=-\vec{r}/2}^{\vec{r}/2} M(\vec{x}-\vec{i}) d\vec{i}} \quad \text{and} \quad c_{outside} = \frac{\int\limits_{\vec{i}=-\vec{r}/2}^{\vec{r}/2} I(\vec{x}-\vec{i})(1 - M(\vec{x}-\vec{i})) d\vec{i}}{\int\limits_{\vec{i}=-\vec{r}/2}^{\vec{r}/2} 1 - M(\vec{x}-\vec{i}) d\vec{i}}$$

or

$$c_{inside} = \frac{\int\limits_{\vec{i}=-\vec{r}/2}^{\vec{r}/2} I(\vec{x}-\vec{i}) H(\vec{x}-\vec{i}) d\vec{i}}{\int\limits_{\vec{i}=-\vec{r}/2}^{\vec{r}/2} H(\vec{x}-\vec{i}) d\vec{i}} \quad \text{and} \quad c_{outside} = \frac{\int\limits_{\vec{i}=-\vec{r}/2}^{\vec{r}/2} I(\vec{x}-\vec{i})(1 - H(\vec{x}-\vec{i})) d\vec{i}}{\int\limits_{\vec{i}=-\vec{r}/2}^{\vec{r}/2} 1 - H(\vec{x}-\vec{i}) d\vec{i}}.$$

In the following, it should be noted that (i, j) could also be read as $\vec{i}$ and didj can be read as $d\vec{i}$.

Thus, regarding formulae (6),

$$c_{inside} = \frac{\iint\limits_{xy} I(x, y) M(x, y) dxdy}{\iint\limits_{xy} M(x, y) dxdy} \quad \text{and} \quad c_{inside} = \frac{\iint\limits_{xy} I(x, y)(1 - M(x, y)) dxdy}{\iint\limits_{xy} (1 - M(x, y)) dxdy},$$

only one inside mean and one outside mean is calculated for the whole the image. This is the immediate implementation of the piecewise constant formulation of the Chan Vese model.

In formulae (8) or (9), an inside mean and outside mean is calculated for every pixel in the image. These means are computed in the local vicinity of the pixel as shown in the limit of the integrals in Equations (8) or (9).

It is worth noting that introducing local means alleviates the piecewise constant assumption and makes the system more robust to intensity inhomogeneities. This makes the model more robust in practice.

In the case, a square (or rectangular) region is not appropriate, the region could also be chosen arbitrary. This could be achieved with an integral over I(x, y) * W where "*" is a convolution operation and W represents any local kernel (representing the respective region around a pixel). For the Mumford Shah Energy $c_{inside}$, $c_{outside}$ inside and outside a contour would be calculated from:

$$c_{inside} = \frac{\iint (I \cdot H) * W(i,j)didj}{\iint H * W(i,j)didj} \quad and \quad c_{outside} = \frac{\iint (I \cdot (1-H)) * W(i,j)didj}{\iint (1-H) * W(i,j)didj} \,, \qquad (10)$$

with the step function H, and for the Chan Vese Energy:

$$c_{inside} = \frac{\iint (I \cdot M) * W(i,j)didj}{\iint M * W(i,j)didj} \quad and \quad c_{outside} = \frac{\iint (I \cdot (1-M)) * W(i,j)didj}{\iint (1-M) * W(i,j)didj} \,. \qquad (11)$$

For higher dimensions, (i, j) should be read as $\vec{i}$ and didj should be read as $d\vec{i}$.

The previous formulations can be generalized for multi-class segmentation. According to a preferred method, the energy is generalized for multi-class segmentation of members c from a class C, wherein the loss function comprises a term that can be described as:

$$E_{multiclass} = a_c \sum_{c}^{C} E(P_c, I) \delta_c \,, \qquad (12)$$

especially

$$E_{CV,multiclass} = a_c \sum_{c}^{C} E_{CV}(P_c, I) \delta_c \qquad (13)$$

with the weight factor for a class member $a_c$, a binary ground truth G and

$$\delta_c = \begin{cases} 1 & c \in G \\ 0 & otherwise \end{cases} \,.$$

According to a preferred method, the loss function LOSS is calculated by LOSS = BCE + $\alpha \cdot E_{MS}$, preferably LOSS = BCE + $\alpha E_{CV}$, here BCE is a conventional binary cross entropy and a parameter $\alpha$ as weight parameter. This loss function can be used for training in any image-to-image architecture. Also the above Multiclass solution can be included in the LOSS function by replacing $E_{MS}/E_{CV}$ with the corresponding multiclass term.

According to a preferred method, the network is a deep learning network, preferably a deep belief network, a recurrent neural network or a convolutional neural network, especially with a U-Net like architecture.

According to a preferred method, the module is trained to minimize the Mumford-Shah Energy Function of the training images.

In a preferred system according to the invention comprising a module according to the invention, components of the system, especially the module, are part of a data-network, wherein preferably the data-network and a medical imaging system are in data-communication with each other, wherein the data-network preferably comprises parts of the internet and/or a cloud-based computing system, wherein at least the module is realized in this cloud-based computing system. For example, the components of the system are part of a data-network, wherein preferably the data-network and a (medical) imaging system which provides the image data are in communication with each other. Such a networked solution could be implemented via an internet platform and/or in a cloud-based computing system.

The method for image segmentation or the training method may also include elements of "cloud computing". In the technical field of "cloud computing", an IT infrastructure is provided over a data-network, e.g. a storage space or processing power and/or application software. The communication between the user and the "cloud" is achieved by means of data interfaces and/or data transmission protocols.

In the context of "cloud computing", in a preferred embodiment of the method according to the invention, provision of data via a data channel (for example a data-network) to a "cloud" takes place. This "cloud" includes a (remote) computing system, e.g. a computer cluster that typically does not include the user's local machine. This cloud can be made available in particular by the medical facility, which also provides the medical imaging systems. In particular, the image acquisition data is sent to a (remote) computer system (the "cloud") via a RIS (Radiology Information System) or a PACS (Picture Archiving and Communication System).

Within the scope of a preferred embodiment of the system according to the invention, the above-mentioned module is present on the "cloud" side and used and/or trained there. A preferred system further comprises, a local computing unit connected to the system via a data channel (e.g. a data-network, particularly configured as RIS or PACS). The local computing unit includes at least one data receiving interface to receive data. Moreover, it is preferred if the local computer additionally has a transmission interface in order to send data to the system.

One serious advantage of this invention is the correction of any shape-bias that may occur during training by explicitly considering the image intensity distribution. This guarantees that the segmentation would always accurately delineate high contrast boundaries. Thus, this invention solves the problem of accurately segmenting an object of interest with a (deep) learning model due to the proposed loss function that captures specifically the intensity distributions of the object and the background.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Figure 1 shows a simplified CT system according to an embodiment of the invention.

Figure 2 shows the basic architecture of a convolutional network.

Figure 3 shows a block diagram of the process flow of a preferred method according to the invention.

Figure 4 shows different areas of an image.

Figure 5 shows an object of interest and a band around its contour.

Figure 6 shows a comparison between images segmented with different methods.

Figure 7 shows a further comparison between images segmented with different methods.

Figure 8 shows a further comparison between images segmented with different methods.

Figure 9 shows a further comparison between images segmented with different methods.

In the diagrams, like numbers refer to like objects throughout. Objects in the diagrams are not necessarily drawn to scale. It is clear that all references in the figure are exemplary and do not limit the scope of the invention.

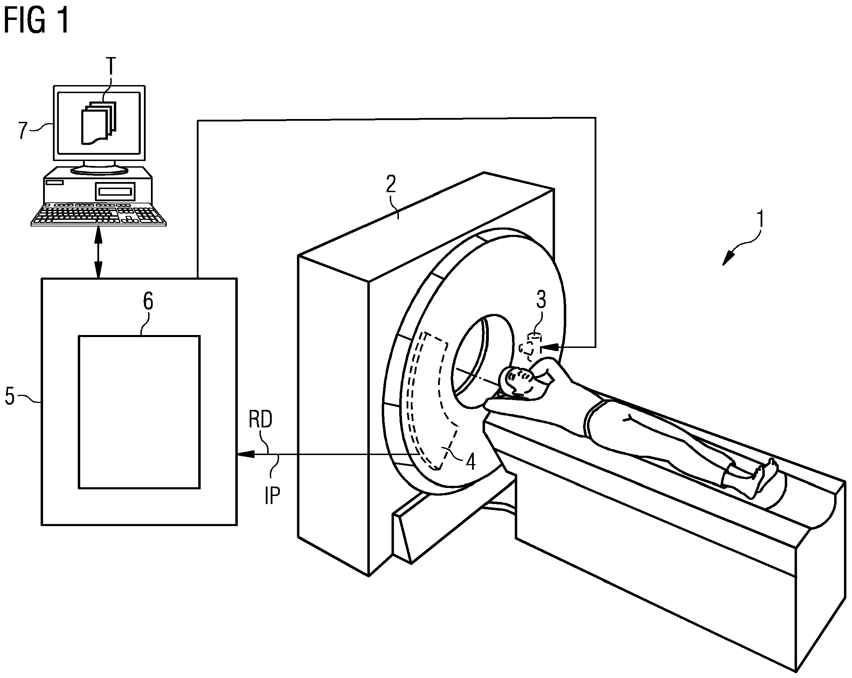

Figure 1 shows a simplified computer tomography system 1 as exemplary imaging system 1 with a control device 5 comprising a module 6 according to the invention. The CT-system 1 has in the usual way a scanner 2 with a gantry, in which an x-ray source 3 with a detector 4 rotates around a patient and records raw data RD that is later reconstructed to images by the control device 5.

It is pointed out that the exemplary embodiment according to this figure is only an example of an imaging system 1 and the invention can also be used on theoretically any imaging system that is used in medical and non-medical environment. Likewise, only those components are shown that are essential for explaining the invention. In principle, such imaging systems and associated control devices are known to the person skilled in the art and therefore do not need to be explained in detail.

The CT-system 1 could record training images T, i.e. images that are used for training of the module 6 according to the invention. If a trained module 6 is used, images of the CT-system 1 are processed by the module 6.

For creating training images T, a user can examine CT-images and label them accordingly with a ground truth. The examination of images (and the creation of training images T with the ground truth) can be performed on a terminal 7 that is able to communicate with the control device 5. This terminal can also be used to examine results of the module 6 according to the invention.

For image segmentation, raw data RD could be used as input images IP, however, also reconstructed images (from the raw data RD) could be used as input images IP. Here it is essential, on which data the module 6 has been trained.

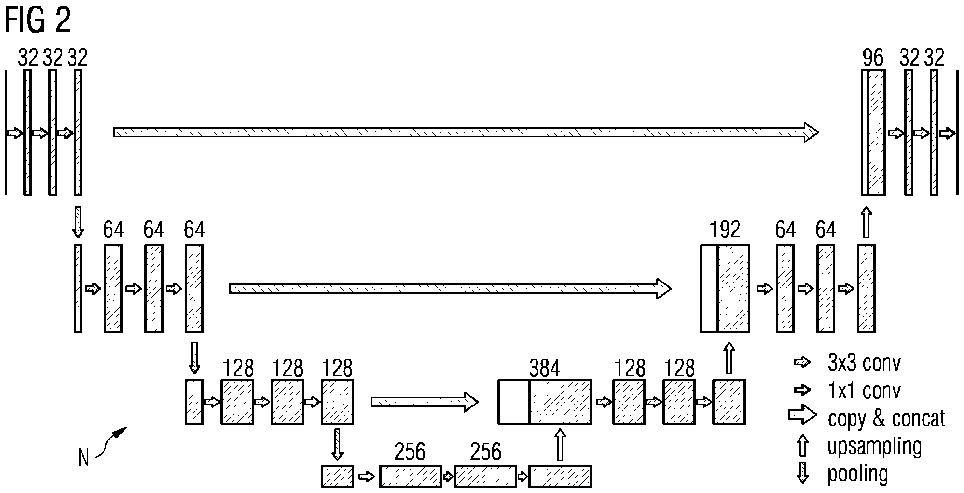

Figure 2 shows the basic architecture of a convolutional network N. Shown here is a so called U-Net architecture that is especially used for biomedical image segmentation. This architecture is based on a fully convolutional network N, where a usual contracting network comprises successive layers with upsampling operators. In the upsampling part (right) there are a large number of feature channels which allow the network to propagate context information to higher resolution layers. It can be seen that the expansive part is similar / symmetric to the contracting part. The short arrows pointing from left to right represent 3x3 convolutions together with a batch norm and a rectified linear unit (ReLu), wherein the last arrow to the right represents a 1X1 convolution, only. The long, hatched arrows pointing from left to right represent a copy and concatenate action, the arrows pointing down represent a 2x2 average pooling and the arrows pointing up represent a 2x bilinear upsampling. The general setup of a convolutional network N as well as the U-Net architecture is well known to the artisan.

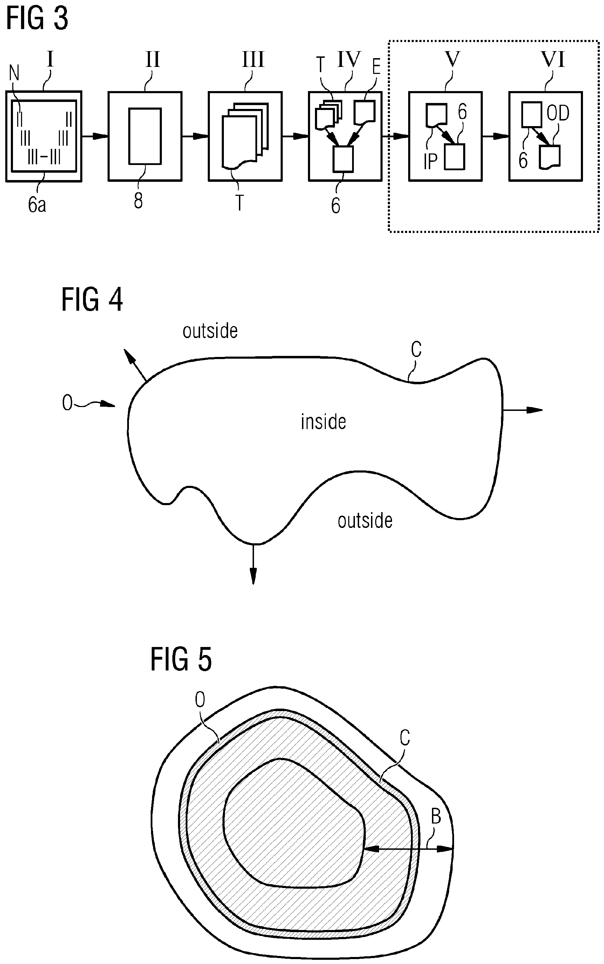

Figure 3 shows a block diagram of the process flow of a preferred method for training and segmenting according to the invention. Steps I to IV represent the training and steps V and VI the segmenting procedure. Results of the segmenting procedure (especially when examined by an operator) could be used as training images T for a further training (not shown, but further training would mean to perform step IV again with the trained module 6 and the new training images T).

In step I, a module 6a comprising a neural network N is provided, e.g. a convolutional network N with a U-Net architecture. This module 6a may typically be untrained, however, it could also be already trained and now being trained further.

In step II, a computing unit is provided which is designed for training the neural network N of the module 6. The computing unit should be able to compute all relevant calculations, especially minimizing the energy function. The computing unit could be a computing unit of a control unit 5 of an imaging apparatus (see e.g. figure 1).

In step III, a plurality of training images T is provided comprising objects O with contours C (see e.g. figure 5) and preferably also information about a ground truth, e.g. marked contours.

In step IV, the neural network N (thus also the module 6) is trained with the training images T by using a Mumford-Shah Energy Function as loss function for training and/or by minimizing the Mumford-Shah Energy. Preferably a Chan-Vese or another approximation is used for the Mumford-Shah Energy Function.

After step IV (wherein step IV is looped many times to process a vast number of training images), there is a trained module 6, i.e. a module 6 with a trained neural network N. This module 6 is then used for image segmentation.

In step V, a number of images (designated as "input pictures" IP) is inputted into the module 6. The images should be preferably similar to training images T what means that they should show a similar motive. However, the module 6 can also be trained to segment arbitrary kinds of objects O.

In step VI, an output (output data OD) is generated with the module 6 based on the input pictures IP. The output data OD may comprise the images with recognized contours or the contours only.

Figure 4 shows areas of an image. There is a contour C as border of an object O of interest, wherein the arrows on the contour show the perpendicular normal vector at the respective positions. Regarding a distance function $\varphi(x, y)$ being a measure for the distance from the contour C to a regarded pixel on the coordinate $(x, y)$. In 3D, the coordinates would be $(x, y, z)$ or respective coordinates. For a pixel inside the object O it could be defined that $\varphi > 0$, for a pixel on the contour C $\varphi = 0$ and for a pixel outside the object O $\varphi < 0$. For calculating a step function H in the Mumford-Shah Energy Function, this distance can be used to get the function $H_{xy} = H(\varphi (x, y))$.

Figure 5 shows an object O of interest and a (narrow) band B around its contour C.

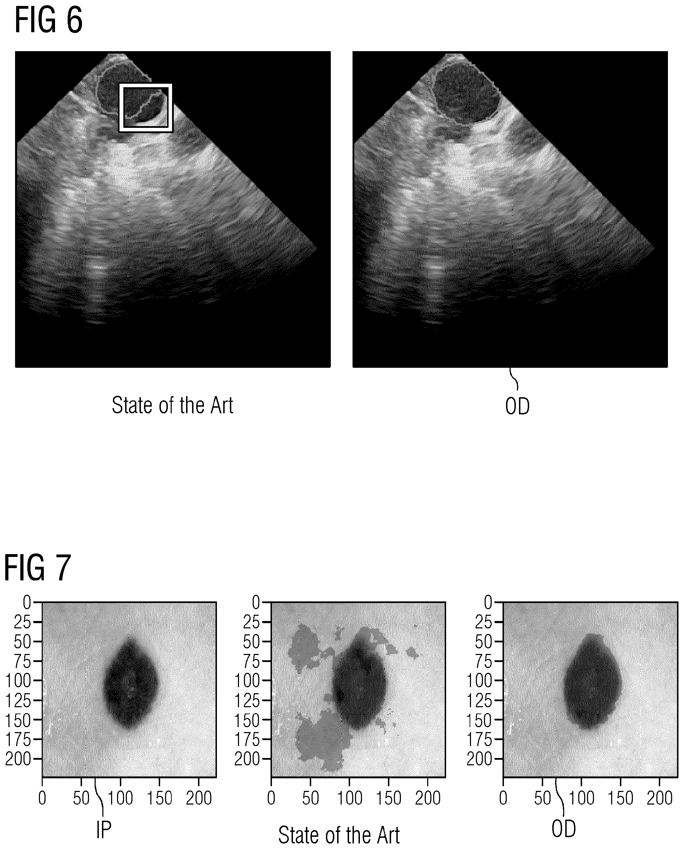

Figure 6 shows a comparison between images segmented with different methods. This figure shows an Intracardiac Echocardiography (ICE) image of the left atrium. The left image depicts the segmentation results using traditional image to image segmentation methods. The right image depicts the segmentation result when the object/background intensity distributions are incorporated in the loss function according to the invention. One could see different segmentation boundaries resulting from the different methods. On the left (state of the art) the traditional image-to-image segmentation leads to misalignments (marked with a box). On the right, the segmentation (output data OD) using the model proposed in this invention is more accurate.

Figure 7 shows a further comparison between images of a skin melanoma segmented with different methods. On the left, the input image IP is shown, in the middle the result of a segmentation using cross entropy (state of the art) is shown and on the right a segmentation (output data OD) using the proposed invention. It can be seen, that the conventional method in the middle provides more false segmented regions than the invention.

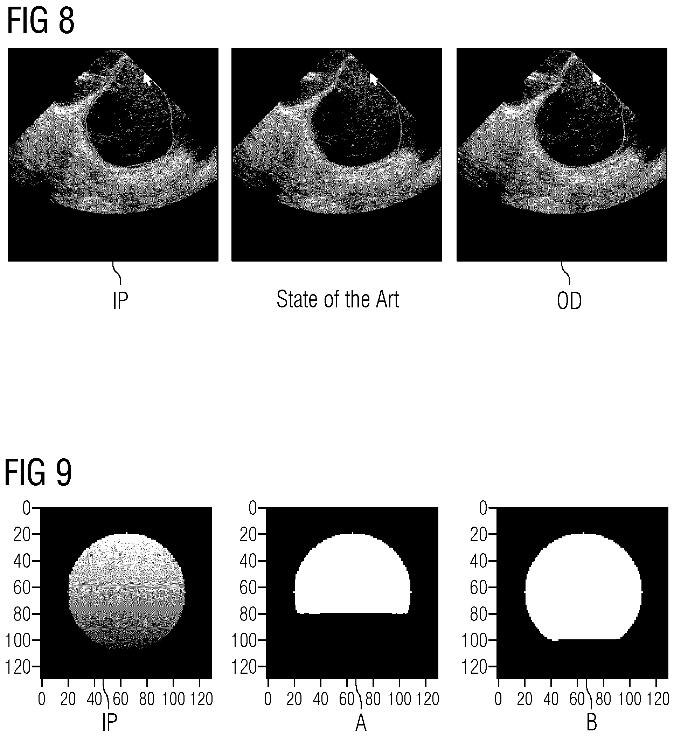

Figure 8 shows a further comparison between images segmented with different methods. The images show examples of a segmentation of the left atrium in an ICE ultrasound picture. On the left, the input image IP superimposed with the ground truth is shown, in the middle the result of a segmentation using cross entropy (state of the art) is shown and on the right a segmentation (output data OD) using the proposed invention. It can be seen at the position of the arrow, that the conventional method in the middle provides a false segmentation in the upper part.

Figure 9 shows a further comparison between images segmented with different methods. It illustrates the impact of using the local mean representation. On the left, the input image IP, here an image of a circle with a color gradient, is shown it is a synthetic image with high inhomogeneity. In the middle (picture A), the result of a global means segmentation is obtained using the piecewise-constant assumption where $c_{inside}$ and $c_{outside}$ are computed using eq. (6). On the right (picture B), a local means segmentation is computed by relaxing the homogeneity constraint and computing $c_{inside}$ and $c_{outside}$ using eq. (9). It can be seen at the lower part of the object, that the contour is reconstructed more accurately with local means segmentation.

Although the present invention has been disclosed in the form of preferred embodiments and variations thereon, it will be understood that numerous additional modifications and variations could be made thereto without departing from the scope of the invention. For the sake of clarity, it is to be understood that the use of "a" or "an" throughout this application does not exclude a plurality, and "comprising" does not exclude other steps or elements. The mention of a "module" or a "device" does not preclude the use of more than one unit or device.

**Claims**

1. A method for designing a module (6) for image segmentation, comprising the steps:

   - providing a module (6a) comprising a neural network (N),
   - providing a computing unit designed for training the neural network (N) of the module (6),
   - providing a plurality of training images (T),
   - training of the neural network (N) with the training images (T) by using a Mumford-Shah Energy Function as basis for a loss function for training and/or by minimizing the Mumford-Shah Energy.

2. The method according to claim 2, wherein image intensities to calculate the Mumford Shah Energy are approximated with the mean intensity inside an object (O) of interest and the mean intensity outside the object (O) of interest, preferably wherein the loss function comprises the minimization of the intensity deviations around the mean values inside and outside the object (O).

3. The method according to one of the preceding claims, wherein the training images (T) comprise a spatial intensity I(x, y) and the Mumford-Shah Energy is approximated with a distance $\varphi(x, y)$ from a contour to a pixel (x, y), a step function $H_{xy}=H(\varphi(x, y))$, a weight $\mu$ of a contour length term L, and a weight $\gamma$ of a contour area term A by the formula:

$$E = \iint\limits_{xy} F_{inside}H_{xy}dxdy + \iint\limits_{xy} F_{outside}\left(1 - H_{xy}\right)dxdy + \mu L\left(H_{xy}\right) + \gamma A\left(H_{xy}\right)$$

with

$$F_{inside}\left(x, y\right) = \left|I\left(x, y\right) - c_{inside}\left(x, y\right)\right|^2 \quad \text{and} \quad F_{outside}\left(x, y\right) = \left|I\left(x, y\right) - c_{outside}\left(x, y\right)\right|^2$$

and with mean values $c_{inside}$, $c_{outside}$ inside and outside a contour

$$c_{inside} = \frac{\iint\limits_{xy} I\left(x, y\right)H_{xy}dxdy}{\iint\limits_{xy} H_{xy}dxdy} \quad \text{and} \quad c_{inside} = \frac{\iint\limits_{xy} I\left(x, y\right)\left(1 - H_{xy}\right)dxdy}{\iint\limits_{xy}\left(1 - H_{xy}\right)dxdy}$$

or

$$c_{inside}\left(x, y\right) = \frac{\int\limits_{i=-r2/2}^{r2/2}\int\limits_{j=-r1/2}^{r1/2} I\left(x - i, y - j\right)H_{x-i,y-j}didj}{\int\limits_{i=-r2/2}^{r2/2}\int\limits_{j=-r1/2}^{r1/2} H_{x-i,y-j}didj}$$

and

$$c_{outside}(x, y) = \frac{\int\limits_{i=-r2/2}^{r2/2}\int\limits_{j=-r1/2}^{r1/2} I\,(x-i, y-j)(1-H_{x-i, y-j})didj}{\int\limits_{i=-r2/2}^{r2/2}\int\limits_{j=-r1/2}^{r1/2}(1-H_{x-i, y-j})didj},$$

where r1 and r2 are local radii around a pixel (x, y).

4. The method according to one of the preceding claims, wherein the training images (T) comprise a spatial intensity I(x, y), a and a binary ground truth mask G for the images is provided, a probability map P is calculated giving the probability that a pixel belongs to the object (O) and a segmentation mask M is obtained by thresholding the probability map P at a predefined threshold T, and wherein the Mumford-Shah Energy is approximated with an energy function $E_{CV}$ by the formula:

$$E_{CV} = \iint\limits_{xy} F_{inside}(x, y)P(x, y)dxdy + \iint\limits_{xy} F_{outside}(x, y)(1-P(x, y))dxdy$$

with

$$F_{inside}(x, y) = |I(x, y) - c_{inside}(x, y)|^2 \quad \text{and} \quad F_{outside}(x, y) = |I(x, y) - c_{outside}(x, y)|^2 \quad .$$

5. The method according to one of the preceding claims, wherein the images I are normalized relative to the mean and the standard deviation of the intensity distribution and energy is computed only in a narrow band (B) around a boundary B(x,y) around an object of interest by the formula:

$$ECV = \iint\limits_{xy} F_{inside}(x, y)P(x, y)B(x, y)dxdy + \iint\limits_{xy} F_{outside}(x, y)(1-P(x, y))B(x, y)dxdy$$

with

$$F_{inside}(x, y) = |I(x, y) - c_{inside}(x, y)|^2 \quad \text{and} \quad F_{outside}(x, y) = |I(x, y) - c_{outside}(x, y)|^2 \quad .$$

6. The method according to claim 4 or 5, wherein the mean values $c_{inside}$, $c_{outside}$ inside and outside a contour are

$$c_{inside} = \frac{\iint\limits_{xy} I(x, y)M(x, y)dxdy}{\iint\limits_{xy} M(x, y)dxdy} \quad \text{and} \quad c_{inside} = \frac{\iint\limits_{xy} I(x, y)(1-M(x, y))dxdy}{\iint\limits_{xy}(1-M(x, y))dxdy}$$

or wherein the mean values $c_{inside}$, $c_{outside}$ inside and outside a contour are

$$c_{inside}(x, y) = \frac{\int\limits_{i=-r2/2}^{r2/2}\int\limits_{j=-r1/2}^{r1/2} I\,(x-i, y-j)M(x-i, y-j)didj}{\int\limits_{i=-r2/2}^{r2/2}\int\limits_{j=-r1/2}^{r1/2} M(x-i, y-j)didj}$$

and

$$c_{outside}(x,y) = \frac{\int\limits_{i=-r2/2}^{r2/2}\int\limits_{j=-r1/2}^{r1/2} I\,(x-i,\,y-j)(1-M(x-i,\,y-j))didj}{\int\limits_{i=-r2/2}^{r2/2}\int\limits_{j=-r1/2}^{r1/2}(1-M(x-i,\,y-j))didj},$$

where r1 and r2 are local radii around a pixel (x, y).

7. The method according to one of the preceding claims, wherein a loss function LOSS is calculated by LOSS = BCE + $\alpha \cdot E_{MS}$, preferably LOSS = BCE + $\alpha E_{CV}$, where BCE is a conventional binary cross entropy and a parameter $\alpha$ as weight parameter.

8. The method according to one of the preceding claims, wherein the energy is generalized for multi-class segmentation of members c from a class C, wherein the loss function is based on an equation described as:

$$E_{multiclass} = a_c \sum_{c}^{C} E(P_c,I)\delta_c\,, \quad \text{especially} \quad E_{CV,multiclass} = a_c \sum_{c}^{C} E_{CV}(P_c,I)\delta_c\,,$$

with the weight factor for a class member $a_c$, a binary ground truth G and

$$\delta_c = \begin{cases} 1 & c \in G \\ 0 & otherwise \end{cases}.$$

9. The method according to one of the preceding claims, wherein the neural network (N) is a deep learning network, preferably a deep belief network, a recurrent neural network or a convolutional neural network, especially with a U-Net like architecture.

10. The method according to one of the preceding claims, wherein the module (6) is trained to minimize the Mumford-Shah Energy Function of the training images (T).

11. A module (6) for image segmentation, trained with a method according to any of the preceding claims, the module (6) preferably comprising a deep neural network (N), especially a convolutional network (N).

12. A method for image segmentation, comprising the steps:

- providing a module (6) according to claim 11,
- inputting a number of images (IP) into the module (6), the images (IP) being preferably similar to training images (T),
- generating an output (OD) with the module (6) based on the number of images (IP).

13. An imaging system (1), preferably a medical imaging system, comprising a module (6) according to claim 11 or designed for performing a method according to claim 12.

14. A computer program product comprising a computer program that is directly loadable into a control device (5) for an imaging system (1), especially a medical imaging system, which program product comprises program elements for performing steps of the method according to any of claims 1 to 10 or 12 when the computer program is executed by the control device (5).

15. A computer-readable medium on which is stored program elements that can be read and executed by a computer unit in order to perform steps of the method according to any of claims 1 to 10 or 12 when the program elements are executed by the computer unit.

FIG 1

FIG 2

32 32 32                                                                                          96 32 32

64 64 64                                                          192 64 64

128 128 128                          384 128 128

N

256 256

⇨ 3x3 conv
⇨ 1x1 conv
⇨ copy & concat
⇧ upsampling
⇩ pooling

# FIG 3

I     II     III     T IV E     V     VI

N

6a     8     T     6     IP   6     OD   6

# FIG 4

outside

C

O

inside

outside

# FIG 5

O

C

B

FIG 6

State of the Art                                                     OD

FIG 7

IP                          State of the Art                          OD

# FIG 8

IP          State of the Art          OD

# FIG 9

IP               A               B

Europäisches
Patentamt

European
Patent Office

Office européen
des brevets

# EUROPEAN SEARCH REPORT

Application Number

EP 20 19 2913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KIM BOAH ET AL: "Mumford-Shah Loss Functional for Image Segmentation With Deep Learning", IEEE TRANSACTIONS ON IMAGE PROCESSING, vol. 29, 27 September 2019 (2019-09-27), pages 1856-1866, XP011758720, ISSN: 1057-7149, DOI: 10.1109/TIP.2019.2941265 [retrieved on 2019-11-26] * the whole document * | 1-15 | INV. G06T7/11 G06T7/149 G06N3/04 G06N3/08 |
| X | LUMINITA A VESE ET AL: "A Multiphase Level Set Framework for Image Segmentation Using the Mumford and Shah Model", INTERNATIONAL JOURNAL OF COMPUTER VISION, KLUWER ACADEMIC PUBLISHERS, BO, vol. 50, no. 3, December 2002 (2002-12), pages 271-293, XP019216376, ISSN: 1573-1405, DOI: 10.1023/A:1020874308076 * the whole document * | 1-15 | |
| A | LIU CONG ET AL: "Imposing boundary-aware prior into CNNs-based medical image segmentation", ELECTRONICS LETTERS, IEE STEVENAGE, GB, vol. 56, no. 12, 11 June 2020 (2020-06-11), pages 599-601, XP006090752, ISSN: 0013-5194, DOI: 10.1049/EL.2020.0453 * the whole document * | 1-15 | TECHNICAL FIELDS SEARCHED (IPC) G06T |

The present search report has been drawn up for all claims

| Place of search | Date of completion of the search | Examiner |
|---|---|---|
| Munich | 27 January 2021 | Mohedano del Pozo, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)